# FASCICULE DE BREVET EUROPEEN

(11) **EP 3 205 068 B1**
(45) Date de publication et mention de la délivrance du brevet: **09.09.2020**
(21) Numéro de dépôt: 15787261.5
(22) Date de dépôt: 09.10.2015
(51) Int. Cl.: H04L 29/06, H04L 12/24, G06F 11/30

(54) **PROCEDE D'AJUSTEMENT DYNAMIQUE D'UN NIVEAU DE VERBOSITE D'UN COMPOSANT D'UN RESEAU DE COMMUNICATIONS**
VERFAHREN ZUR DYNAMISCHEN EINSTELLUNG EINES AUSFÜHRLICHKEITSGRADES EINER KOMPONENTE EINES KOMMUNIKATIONSNETZWERKS
METHOD FOR DYNAMIC ADJUSTMENT OF A LEVEL OF VERBOSITY OF A COMPONENT OF A COMMUNICATIONS NETWORK

(30) Priorité: 10.10.2014 FR 1459718
(43) Date de publication de la demande: 16.08.2017
(73) Titulaire: Cassidian Cybersecurity SAS, 78990 Elancourt (FR)
(72) Inventeur: HENRY, Manuel, F-78790 Tilly (FR); ROSSIGNEUX, Valerian, F-78180 Montigny Le Bretonneux (FR)
(74) Mandataire: Cabinet Camus Lebkiri
(86) Numéro de dépôt international: PCT/FR2015/052727
(87) Numéro de publication internationale: WO 2016/055750

(56) Documents cités:
- US-A1- 2002 198 983
- US-A1- 2004 049 698
- US-A1- 2006 206 941

## Description

### DOMAINE

Le domaine de l'invention concerne le traitement des données de supervision et leur volume dans les systèmes d'informations reposant sur une architecture réseau.

### ETAT DE L'ART

Actuellement, les systèmes d'information se complexifient et mettent en œuvre des réseaux de données de plus en plus contraint. En effet, ces réseaux doivent mutualiser divers protocoles de données, organiser les transferts d'informations au sein de diverses architectures logicielles, ordonner les données et prioriser les flux transmis. Par ailleurs, les réseaux de données intègrent de plus en plus d'objets connectés et de ressources matériels différentes ce qui alourdit la gestion du réseau.

Dans ce contexte, les systèmes d'informations doivent également se prémunir d'attaques extérieures au réseau, de hackage et de virus pouvant perturber le bon fonctionnement du réseau.

Une solution qui est aujourd'hui déployée dans les systèmes d'information est un outil de supervision reposant sur la collecte de données de contrôle et de surveillance du réseau. Ces messages permettent de rendre compte à un organe de contrôle de l'état et de l'activité du réseau, cet organe est également appelé centre de supervision ou centre de contrôle. L'état et l'activité du réseau comprend la surveillance de l'état et de l'activité des équipements connectés, des applications accessibles, des utilisateurs connectés, ainsi que de leurs droits sur les différents composants du réseau, un composant pouvant être un équipement ou une application.

Chaque évènement ou changement d'état d'un composant ou d'une action d'un utilisateur au regard de ses droits génère au moins un message de supervision qui comprend au moins un log et un événement. Les messages peuvent comprendre différents niveaux d'importance en fonction de l'événement survenu ou de l'état modifié. L'organe de contrôle comprend un outil de gestion des messages de supervision reçus pour traiter l'information de manière priorisée. En effet, certaines actions sont déclenchées au niveau de l'organe de contrôle lorsqu'une combinaison de messages reçus est constatée, par exemple une série d'attaques réalisées par un hacker vont générer différents messages de supervision sur une fenêtre de temps donnée. Il est donc nécessaire de traiter les messages de supervision au cas par cas, mais également certaines corrélations de messages reçus.

Un des problème rencontré actuellement dans les réseaux complexes accessibles à un grand nombre d'utilisateurs, comprenant un grand nombre d'équipements connectés et mettant en œuvre de nombreuses applications et une gestion de droits d'accès complexes est qu'un grand volume de messages de supervision sont générés au sein du réseau. Le volume de données de supervision remontant à l'organe de contrôle devient alors difficile à traiter et à stocker. Dans un grand volume de données à traiter, les opérations de corrélations des messages de supervision reçus répondent à des règles de traitement permettant de détecter des anomalies du réseau. Ces règles sont implémentées au niveau de l'organe de contrôle. Lorsqu'un grand volume de messages est généré vers l'organe de contrôle, outre le problème du stockage, il peut induire un problème de disponibilité de ressources pour le traitement de ces messages de supervision. Enfin un autre problème de l'émission d'un grand nombre de données dans le réseau consiste en un risque de saturation et donc un risque d'arrêt de certains composants ou d'autres fonctionnements sporadiques imprévisibles pouvant survenir pendant le travail d'un utilisateur.

De ce fait, il est possible de définir des niveaux de supervision qui visent à définir quels messages de supervision sont remontés à l'organe de contrôle et quels messages ne sont pas remontés, ces niveaux de supervision sont appelés plus communément des « niveaux de verbosité ». Ainsi, il est possible de définir différents niveaux de verbosité selon les équipements qui sont connectés, les catégories d'utilisateurs connectés ainsi que leurs droits ou encore de certaines applications plus ou moins sensibles. Les niveaux de verbosité sont généralement définis dans les composants déployés. Cependant un problème secondaire de cette solution est qu'en appliquant des règles communes à un ensemble de composants ou d'utilisateurs, le système est fragilisé d'un point de vue de la sécurité et de certaines attaques qui deviennent plus difficiles à détecter du fait de la diminution de la génération de messages de supervision. Cette solution à l'inconvénient de figer un compromis entre le niveau de sécurité exigée pour la surveillance et le contrôle du réseau et le bon fonctionnement du réseau.

Un second problème induit par la mise en place de niveaux de supervision est que les niveaux ne sont pas adaptés à certains types d'attaques complexes pouvant survenir. En effet, certaines attaques sont très ciblées et interviennent sur des longues périodes de temps, ce qui rend difficile leur détection. La diminution d'un niveau de verbosité peut permettre à des attaques noyées dans « le bruit » d'être menaçante pour le réseau sans possibilité de prévention.

Un troisième problème est l'occupation de la bande passante des messages de supervision émis par les équipements y compris les équipements connectés au moyen d'une bande étroite. Typiquement, les équipements mobiles de type « radio communication professionnel » ont une bande de fréquences limitée et principalement réservée aux transmissions de données utiles, dites opérationnelles. Ces données opérationnelles ne devraient pas être trop pénalisées par des transmissions de données de supervision limitant la bande passante.

### RESUME DE L'INVENTION

L'invention vise à pallier aux inconvénients précités.

Un objet de l'invention concerne un procédé de gestion dynamique d'au moins un premier niveau de verbosité d'au moins un composant défini dans un réseau de données, ledit réseau de données ayant un centre de contrôle, chaque composant permettant l'exécution d'un ensemble de tâches et comprenant une configuration de gestion de sécurité associant un message d'état, appelé log, avec l'exécution d'une tâche dudit composant, chaque log associé à une tâche indiquant au moins un évènement et ayant un niveau local, le centre de contrôle collectant un ensemble de logs pour la supervision dudit réseau, ledit procédé comprenant :
▪ une détection d'un stimuli par un centre de contrôle;
▪ une détermination d'au moins un composant associé au stimuli détecté par le centre de contrôle;
▪ une première modification du premier niveau de verbosité dudit composant à un second niveau de verbosité pendant une première période donnée, ladite modification étant engagée par la génération d'une commande de supervision par le centre de contrôle, le second niveau de verbosité étant défini selon le stimuli.

Le niveau local d'une tâche peut être un entier ou un nombre pouvant être configuré ou paramétré dans chaque composant. Le niveau local peut être avantageusement défini sans une même échelle de valeurs que les niveaux de verbosité de sorte à établir des comparaisons efficaces.

Selon un mode de réalisation, après l'écoulement de la première période le procédé comprend :
▪ une seconde modification du second niveau de verbosité du premier composant de sorte à revenir au premier niveau de verbosité.

Selon un mode de réalisation, le centre de contrôle comprend une mémoire dans laquelle sont répertoriés :
▪ un ensemble des composants du réseau et pour chaque composant un premier niveau de verbosité qui lui est associé ;
▪ un ensemble de scénarios d'investigation comportant des stimulus prédéfinis, chaque stimuli prédéfini étant associé à un niveau de verbosité recommandé.

Selon un mode de réalisation, la valeur du second niveau de verbosité est générée en fonction :
▪ d'un scénario d'investigation identifié en fonction d'un stimuli déterminé, un stimuli déterminé comprenant au moins un évènement identifié par un log reçu ;
▪ d'une donnée de performance d'un composant associé à un log pris en compte dans la détermination du stimuli.

Selon un mode de réalisation, le stimuli est le résultat de :
▪ au moins une opération de corrélation d'un ensemble d'événements survenant dans une fenêtre de temps donnée et reportés par une génération d'un ensemble de logs d'au moins un composant ;
▪ une comparaison du résultat de l'opération de corrélation de logs collectés avec l'ensemble des scénarios d'investigation répertoriés dans le centre de contrôle.

Selon un mode de réalisation, un scénario d'investigation et une opération de corrélation aboutissant à la détermination d'un stimuli prennent en compte :
▪ une pluralité d'événements identifiés par des logs survenant dans une période donnée ;
▪ un ou une pluralité de composant(s) associé(s) à au moins un événement ;
▪ une identification d'au moins un équipement.

Selon un mode de réalisation, au moins un agent répertoriant un ensemble de composants est configuré pour collecter les logs générés d'une pluralité de composants, l'agent transmettant les logs collectés au centre de contrôle.

Selon un mode de réalisation, un log comprend au moins un des éléments suivants :
▪ une date correspondant à la survenance d'un évènement relatif à la tâche exécutée ;
▪ un identifiant d'au moins un utilisateur ;
▪ un identifiant d'au moins un composant ;
▪ une catégorie ou une criticité.

Selon un mode de réalisation, un log est généré par une tâche lorsque son niveau local est supérieur au niveau de verbosité du composant.

Selon un mode de réalisation, chaque log généré est stocké dans un fichier local du composant ou transmis à un agent ou transmis au centre de contrôle du réseau.

Selon un mode de réalisation, en le second niveau de verbosité du composant est compris entre le premier niveau de verbosité du composant et le niveau maximal possible de verbosité d'un composant, le second niveau de verbosité dépendant du stimuli déterminé.

Selon un mode de réalisation, un composant est un composant applicatif de la liste suivante :
▪ un driver ;
▪ un agent local d'un matériel informatique ;
▪ une base de données ;
▪ une application métier ;
▪ un système d'exploitation ;
▪ une application réseau ;
▪ un firmware ;
▪ un anti-virus ;
▪ un pare-feu ;
▪ un agent d'un composant matériel.

Selon un mode de réalisation, un évènement susceptible d'intervenir et de générer un log est compris parmi la liste suivante :
▪ une commande donnée sur une fonction d'un composant donné ;
▪ une génération d'un résultat d'une fonction exécutée consécutivement à une commande ;
▪ un accès, une ouverture, fermeture, une modification d'un fichier ou d'un dossier donné ;
▪ un nombre déterminé de connexions simultanées à un composant ;
▪ une requête donnée ayant une adresse IP donnée ;
▪ un accès à une interface donnée du composant ;
▪ un reboot du composant ;
▪ une déconnexion du composant.

Un avantage du procédé de l'invention est d'adapter le niveau de verbosité d'un composant d'un réseau en fonction de données dynamiques et de son contexte. L'intérêt majeur est de réduire l'émission de log surchargeant le réseau tout en préservant un niveau de surveillance et en assurant une bonne sécurité du réseau.

Un autre avantage est de proposer un procédé automatique qui peut basculer dans un mode sur détection d'un stimuli et revenir au mode par défaut automatiquement par exemple après un certain temps. Ceci permet une économie de temps et une simplification de gestion pour le superviseur.

Un autre avantage du procédé de l'invention est de permettre de définir des scénarios d'investigations complexes prédéfinis et préenregistrés qui peuvent être configurés par un opérateur selon les stimuli détectés. Ces derniers peuvent être édités, modifié selon les cas de figures.

Un autre avantage de l'invention est de prendre en compte automatiquement des niveaux de performances des composants et du matériel du réseau. Ainsi, non seulement le procédé de l'invention permet d'alléger le volume d'informations transitant sur le réseau mais également les sollicitations de chaque composant du réseau en préservant leurs performances.

Un autre avantage de l'invention est d'effectuer des calculs sur la survenance de différents évènements survenant de sorte à engager un scénario spécifique d'investigation.

Un autre objet de l'invention concerne un centre de contrôle d'un niveau de verbosité d'au moins un composant d'un réseau de données, le centre de contrôle comprenant :
▪ une interface réseau pour se connecter à un réseau de données et collecter des données émises par au moins un composant du réseau ;
▪ une mémoire permettant de stocker :
   ∘ un ensemble de composants répertoriés du réseau de données, chaque composant permettant l'exécution d'un ensemble de tâches, chaque tâche étant susceptible de générer un log dans le réseau, chaque log correspondant à un évènement donné ;
   ∘ des stimulus prédéfinis, chaque stimuli correspondant à au moins un évènement ou au résultat de corrélations d'événements survenant dans un fenêtre de temps ;
   ∘ des scénarios d'investigations correspondant à un ensemble de données nécessaires à collecter d'au moins un composant lorsqu'un stimuli est détecté, la collecte d'un ensemble de données nécessaires d'au moins un composant impliquant une configuration d'un niveau de verbosité dudit au moins composant ;
▪ un calculateur permettant d'effectuer des opérations sur des données de logs émis par une pluralité de composants d'un réseau de données, dont :
   ∘ au moins une opération de corrélation des évènements compris dans les logs générés par au moins un compostant sur une fenêtre de temps donnée pour en déduire au moins un stimuli ;
   ∘ au moins une opération de comparaison d'au moins un stimuli déduit avec un stimuli prédéfini ;
   ∘ au moins une déduction d'une consigne devant être envoyé à un composant visant à modifier son niveau de verbosité en fonction du résultat de la comparaison et du scénario d'investigation associé au stimuli prédéfini.

### BREVE DESCRIPTION DES FIGURES

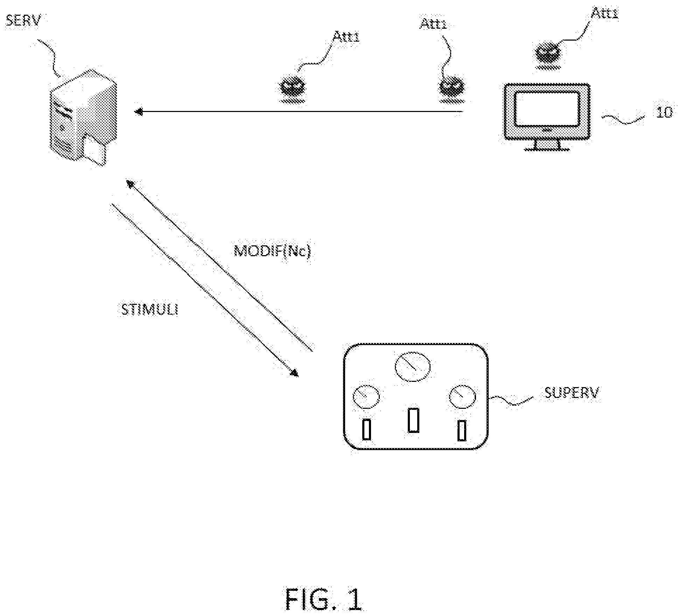

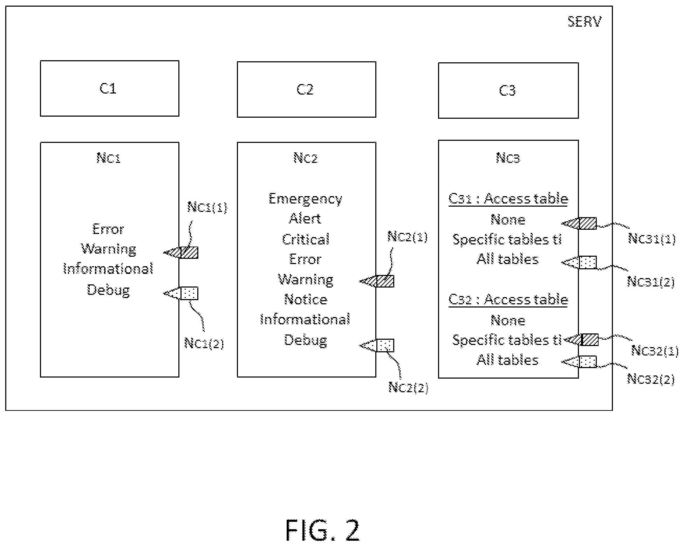

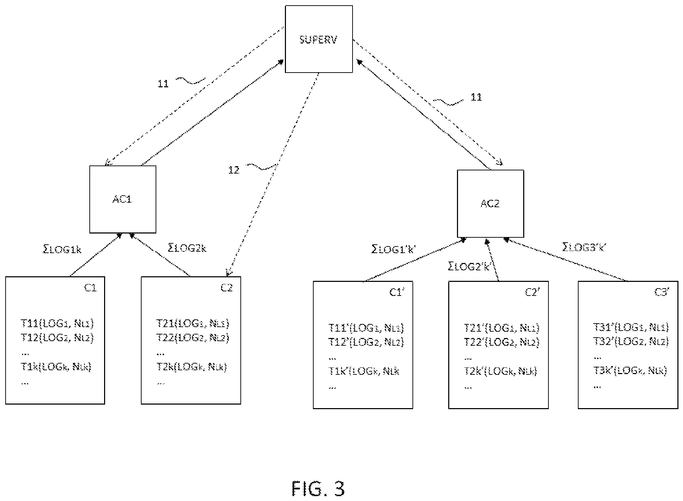

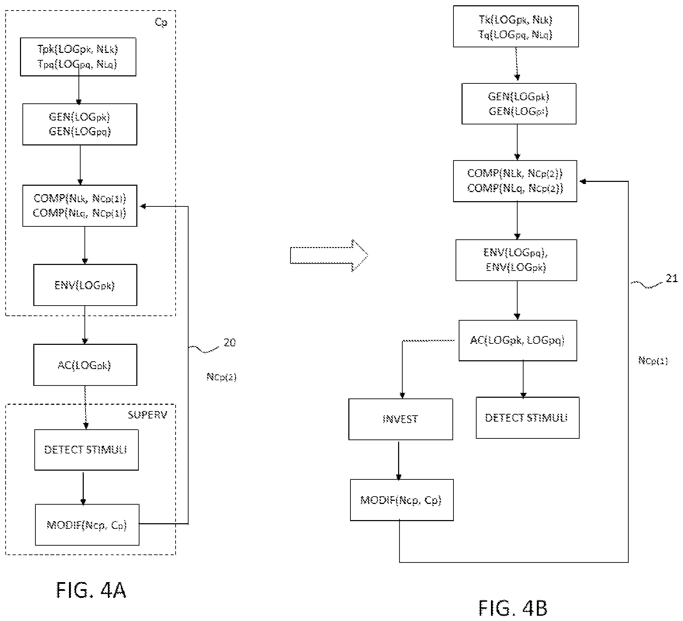

D'autres caractéristiques et avantages de l'invention ressortiront à la lecture de la description détaillée qui suit, en référence aux figures annexées, qui illustrent :
▪ figure 1: une attaque identifiée par un centre de contrôle d'un serveur selon le procédé de l'invention ;
▪ figure 2 : un serveur comprenant une pluralité de composants dont les niveaux de verbosité des logs sont modifiables selon le procédé de l'invention ;
▪ figure 3 : une architecture comportant des agents susceptibles de collectés des logs générés par des composants permettant de s'interfacer avec un centre de contrôle ;
▪ figures 4A et 4B : les principales étapes du procédé mis en œuvre pour la modification d'un niveau de verbosité d'un composant et de son retour à la normale.

### DESCRIPTION

### Définitions

Les composants définis dans la présente description correspondent à tout entité permettant de réaliser un ensemble de fonctions. Il peut s'agir de composants matériels, ou applicatifs. Ils peuvent correspondre à un poste utilisateur, une imprimante, un serveur, un switch, un routeur, une application métier, une application réseau, un système d'exploitation ou encore une base de données, etc. En outre, les composants peuvent être des entités de stockage telles que des fichiers ou des dossiers.

La gestion des droits comprend des niveaux d'accréditations, des accès à des fichiers, des dossiers du réseau, des accès à des composants.

### Introduction avec figure 1

La figure 1 représente un serveur SERV hébergeant différentes applications définissant chacune un composant. La figure 1 illustre l'émission d'un évènement tel qu'une attaque Att₁ menée depuis un poste 10 susceptible d'être déclaré ou non dans le réseau. Une attaque peut être, par exemple, un accès à un fichier ou un dossier non autorisée par le poste 10 ou non autorisé par les droits d'un utilisateur utilisant le poste 10. Une autre attaque peut être, par exemple, une commande d'écriture ou d'extraction dans une table d'une base de données.

L'attaque est généralement ciblée sur un composant. En reprenant les deux précédents exemples, il peut s'agir d'une attaque sur un gestionnaire de fichier ou un système d'exploitation ou sur une base de données.

Chaque composant comprend un paramétrage permettant de définir un niveau de verbosité. Le niveau de verbosité définit le volume de logs générés par le composant correspondant à des évènements détectés et envoyés au centre de contrôle. Lorsque certains logs sont générés relativement aux évènements correspondant à des attaques, ils peuvent définir un stimuli. Selon le procédé de l'invention, un stimuli peut être déterminé ou détecté par un centre de contrôle SUPERV.

Bien qu'un stimuli puisse être détecté, il est possible que le niveau de verbosité affecté à un composant ne permette pas de générer tous les logs nécessaires à une investigation à distance de l'attaque, de son type, et d'autres éléments permettant de réaliser un diagnostic approfondi.

Le procédé de l'invention permet alors de générer une commande notée MODIF(Nc) qui a pour objectif de modifier le niveau de verbosité du composant ayant subi une attaque pour qu'un plus grand volume de logs puisse être généré aux fins d'un diagnostic amélioré.

### Niveaux de verbosité

La figure 2 représente un serveur SERV comprenant par exemple trois composants notés C₁, C₂ et C₃. Les composants peuvent être par exemple un antivirus C₁, un système d'exploitation C₂ et une base de données C₃. Chaque composant C₁, C₂ et C₃ comprend un paramétrage définissant un niveau de verbosité du composant. La figure 2 représente, à titre d'exemple, différents niveaux de verbosité N_{C1}(1), N_{C1}(2), N_{C2}(1), N_{C2}(2), N_{C31}(1), N_{C31}(2), N_{C32}(1), N_{C32}(2), relatifs aux composants C₁, C₂ et C₃. Les différents niveaux de verbosité d'un composant Cₚ, avec p l'indice du composant, sont notés N_{Cp}(i), avec i un entier compris entre 1 et le nombre maximal de niveaux de verbosité définis pour un composant donné Cₚ. Les différents niveaux de verbosité existants dans un composant Cₚ peuvent être définis par le fournisseur du composant ou par un paramétrage donné du composant. Ils répondent souvent à une normalisation qui peut être implémentée de différentes manières selon la nature des composants.

A titre d'exemple, le premier composant C₁ qui est un antivirus comprend 4 niveaux différents de verbosité : « Error », « Warning », « Informational » et « Debug ». Ils sont généralement définis dans la terminologie anglo-saxonne et définissent des degrés croissants de verbosité.

A titre d'exemple, le niveau de verbosité « Debug » correspond à la remontée de tous les logs de tous les évènements pouvant se produire au sein du composant C₁. Le niveau « Error » correspond à la remontée que d'un certain type d'événements correspondant à des erreurs identifiées pouvant se produire. Ainsi lorsque le niveau de verbosité du composant C₁ est sur le niveau « Warning », quelques logs sont générés par le composant C₁, notamment les logs correspondants à des évènements plus importants que d'autres.

Lorsque le centre de contrôle SUPERV détecte un stimuli indiquant qu'une attaque ou qu'un comportement anormal sur le composant a eu lieu, une commande est générée de sorte à modifier le niveau de verbosité du composant C₁ à un niveau de verbosité supérieur.

Selon un mode de réalisation de l'invention, le centre de contrôle SUPERV peut également généré une commande visant à modifier le niveau de verbosité d'un ensemble de composants C₁, C₂ et C₃ qui sont hébergés par exemple sur un même serveur SERV.

La figure 2 représente des flèches agencées en regard du niveau de verbosité en question lorsque des commandes de modifications du niveau de verbosité sont générées par le centre de contrôle SUPERV, dont notamment :
▪ le passage d'un niveau de verbosité de N_{C1}(1) au degré N_{C1}(2) du composant C₁ ;
▪ le passage d'un niveau de verbosité de N_{C2}(1) au degré N_{C2}(2) du composant C₂ ;
▪ le passage d'un niveau de verbosité de N_{C31}(1) au degré N_{C31}(2) d'une partie C₃₁ du composant C₃ ;
▪ le passage d'un niveau de verbosité de N_{C32}(1) au degré N_{C32}(2) d'une partie C₃₂ du composant C₃.

### Sous-composants

Un composant Cₚ peut en effet comprendre une architecture définissant des sous-composants (Cₚⱼ)_{j∈[1 ;Jmax]}, avec j un indice désignant un sous composant du composant Cₚ, le nombre de sous composants dans un composant Cₚ étant égal à Jₘₐₓ. Les sous-composants sont également appelés des parties d'un composant. Cette architecture est particulièrement adaptée par exemple aux bases de données qui comprennent différentes tables. Chaque table peut comprendre différents niveaux de sécurité qui nécessitent un paramétrage indépendant d'une table à l'autre en ce qui concerne le niveau de verbosité des sous-composants.

Le procédé de l'invention permet de considérer chaque sous-composant comme un composant dont le niveau de verbosité est modifiable indépendamment des autres sous-composants du même composant.

La figure 3 représente notamment un centre de contrôle SUPERV, des composants C₁, C₂, C₁', C₂' et C₃'.

Un ensemble de composants peut être hébergé sur un même matériel tel qu'un serveur, un routeur ou n'importe quel équipement connecté au réseau supervisé par le centre de contrôle SUPERV.

### Agents

De manière à collecter les logs émis par les composants d'un même ensemble, des agents AC₁, AC₂ peuvent être configurés pour centraliser les logs émis par chaque composant.

A titre d'exemple, la figure 2 représente un serveur SERV comportant un ensemble de composants. Un agent peut être hébergé par ce même serveur SERV dont la fonction est de répertorier les composants du serveur et de collecter les logs générés par chaque composant.

Selon un mode de réalisation, illustré à la figure 3, le centre de contrôle SUPERV comprend une interface réseau 11 avec chaque agent AC₁, AC₂ de sorte à collecter les logs émis par chaque composant. Selon un mode de réalisation, chaque agent permet d'identifier les logs avec les composants dont ils sont issus et d'organiser les logs selon des critères prédéfinis. Un agent peut, selon un mode de réalisation, inclure des données supplémentaires dans les logs générés par les tâches exécutées au sein de chaque composant, voire effectuer des opérations de corrélations entre logs pour générer des indicateurs de criticité qui sont eux-mêmes remontés au centre de contrôle SUPERV sous forme de logs.

De manière alternative ou combinée avec les précédents modes, selon un mode de réalisation, le centre de contrôle SUPERV comprend certaines interfaces 11 avec des agents et d'autres interfaces 12 directement avec des composants, par exemple avec un composant C₂ comme illustré à la figure 3.

Selon différents cas de figures compatibles de l'invention, un mode de réalisation permet de définir un agent dans un composant ou dans un équipement hébergeant le composant. Un second mode de réalisation permet de définir un agent à distance, par exemple dédiée à la collecte de logs de différents composants hébergés sur différents équipements. Cela peut être le cas lorsqu'un composant comprend des tâches qui sont distribuées dans le réseau sur différents équipements.

### Génération des LOGs

Lorsqu'un log est généré suite à l'exécution d'une tâche, différents modes de réalisation sont envisageables pour exécuter le procéder de l'invention.

Selon un premier mode de réalisation, les logs sont enregistrés dans un fichier du composant ou un fichier de l'équipement hébergeant le composant. Dans ce dernier cas, on dit également que les logs sont envoyés vers un fichier distant. Dans ce cas, l'agent AC₁ ou AC₂ ou le centre de contrôle SUPERV accède au fichier pour en extraire les logs qui y sont enregistrés.

Selon un autre mode de réalisation, les logs sont envoyés à un agent distant hébergé, par exemple, sur un autre équipement que le composant générant les logs en question.

Les différents modes de réalisations sont combinables par exemple lorsque le réseau comprend différents composants qui sont paramétrés de différentes manières.

### Stimuli = 1 LOG

Le procédé de l'invention comprend une étape visant à identifier un stimuli. Cette étape peut être réalisée par un composant, un agent localisé sur le même équipement que le composant, ou un agent déporté ou encore directement par le centre de contrôle SUPERV.

Selon un premier mode de réalisation, un stimuli correspond à l'identification d'un log donné qui a été généré par un composant donné. Selon un exemple, le centre de contrôle SUPERV reçoit un log provenant d'un composant donné ou d'un agent donné, le log indiquant qu'un évènement donné est survenu sur le composant. Le centre de contrôle SUPERV est capable d'identifier cet évènement ou directement le log. En outre, le centre de contrôle SUPERV identifie le composant, l'équipement hébergeant le composant et le cas échéant l'agent ayant collecté le log. Selon un mode de réalisation, le centre de contrôle identifie une chaine de différents composants. Dans ce dernier cas de figure, un évènement suspect survenant sur un composant peut permettre une analyse d'un ensemble de composants susceptibles d'être affectés par une anomalie ou une attaque. Le procédé de l'invention peut alors comprendre une étape visant à modifier le niveau de verbosité d'un ensemble de composants.

Selon un mode de réalisation, le centre de contrôle associe à chaque évènement un scénario d'investigation de l'erreur, de l'attaque ou de l'anomalie relative à l'événement remonté. Le scénario d'investigation comprend une analyse d'un certain nombre de logs du composant pour identifier une cause. Lorsque le centre de contrôle SUPERV identifie dans son scénario d'investigation les niveaux de verbosité des logs dont il a besoin pour engager son analyse, il peut en déduire un niveau de verbosité maximal nécessaire qui doit être modifié dans le composant. Le niveau de verbosité identifié, le centre de contrôle génère une commande de modification du niveau de verbosité du composant en question selon le procédé de l'invention. Le niveau de verbosité du composant est modifié de sorte à ce que les logs nécessaires à l'analyse soient générés et envoyés au centre de contrôle.

Ainsi, selon qu'un évènement donné survienne ou pas, le procédé de l'invention est capable de modifier dynamiquement le niveau de verbosité du composant.

A titre d'exemple selon un mode de réalisation, le centre de contrôle comprend une base de données répertoriant les types d'événements susceptibles de survenir pour un composant donné ou un agent donné et y associe un niveau de verbosité devant être engagé sur le composant en cas de survenance de l'événement.

### Stimuli = résultat d'une corrélation

Selon un autre mode de réalisation, le stimuli est identifié après des opérations de corrélations de logs qui sont générés. Selon le mode de réalisation de l'invention envisagé, ces opérations de corrélations peuvent être réalisées par :
▪ le composant lui-même, le composant émet alors un indicateur à un agent ou au centre de contrôle indiquant le résultat de la corrélation. L'indicateur peut être inclus lui-même dans un log particulier. Ce résultat peut définir alors un stimuli selon sa valeur ;
▪ l'agent qui collecte des logs de différents composants, l'agent peut alors corréler des logs provenant d'un même composant ou encore des logs émis de différents composants, par exemple lors d'une attaque conjointe de différents composants ;
▪ le centre de contrôle qui collecte tous les logs soient envoyés directement par les composants, soient par des agents intermédiaires ou encore les deux.

Un avantage de la détection d'un stimuli issu d'opérations de corrélations de logs reçus est qu'il est possible d'identifier, par exemple, des attaques sur des fenêtres de temps données ou encore des attaques conjointes sur différents composants du réseau.

Sur la figure 3, sont indiquées différentes tâches Tₚₖ(LOGₚₖ, N_{Lk}) qui sont susceptibles d'être exécutées au sein de chaque composant Cₚ. L'indice « p » permet de nommer le composant et l'indice « k » permet de désigner une tâche effectuée dans le composant Cₚ.

Chaque tâche Tₚₖ(LOGₚₖ, N_{Lk}) génère un log LOGₚₖ. Les logs LOGₚₖ ainsi générés sont envoyés après une étape de comparaison détaillée ci-après lorsque qu'un niveau local N_{Lk} de la tâche ou du log est supérieur au niveau de verbosité N_{Cp} du composant Cₚ.

On comprend que les agents AC₁ et AC₂ collectent uniquement les logs qui ont été envoyés par les composants auxquels les agents sont rattachés.

Selon un mode de réalisation, le centre de contrôle SUPERV comprend un inventaire de stimulus prédéfinis, chaque stimuli étant associé à une combinaison d'événements susceptibles de survenir au sein d'un composant donné dans une période de temps donnée.

A titre d'exemple, l'écriture d'une donnée dans une table d'une base de données définit un premier évènement et son changement de configuration définit un second événement. Ces deux événements, lorsqu'ils surviennent dans une même période de temps donnée et par un même utilisateur, sont susceptibles de correspondre à un stimuli prédéfini.

Le centre de contrôle SUPERV est capable de détecter ces deux évènements comme un stimuli lorsque des logs ont été envoyés.

### Principales étapes du procédé

La figure 4A représente les principales étapes du procédé de l'invention lorsque le centre de contrôle SUPERV détecte un stimuli.

Le composant Cₚ comprend un ensemble de tâches Tₚₖ(LOGₚₖ, N_{Lk}), où p désigne le composant et k une tâche du composant Cₚ. Par exemple le composant C₁ comprend donc les tâches T₁ₖ(LOG₁ₖ, N_{Lk}). Chaque tâche T₁ₖ comporte la définition d'au moins un log LOG₁ₖ et d'un niveau local N_{Lk} qui lui est associé. Lorsque les tâches sont exécutées, par exemple une tâche visant à ouvrir un fichier donné, alors un log associé est généré. Le niveau local N_{Lk} de la tâche T₁ₖ ou du log LOG₁ₖ associé est comparé au niveau de verbosité du composant de sorte à envoyer ou non le log en question vers :
▪ un agent ACₓ, « x » étant l'indice référençant l'agent, ou ;
▪ le centre de contrôle SUPERV ou encore ;
▪ un fichier local.

L'opération visant à comparer le niveau de verbosité d'un log donné LOGₚₖ émis par un composant Cₚ et le niveau de verbosité du composant Cₚ associé pour décider de l'envoi ou non d'un LOG est nommée COMP(N_{Lk}, N_{Cp}) sur les figures 4A et 4B.

L'opération de génération d'un log LOGₚₖ est nommée GEN(LOGₚₖ) sur les figures 4A et 4B. L'opération d'envoi d'un log LOGₚₖ vers un fichier local pour son enregistrement ou un agent ACₓ ou encore le centre de contrôle SUPERV est nommée ENV(LOGₚₖ) sur les figures 4A et 4B.

Dans l'exemple des figures 4A, 4B, un agent collecte les logs envoyés et générés par les tâches exécutées sur chaque composant. Cette collecte de logs par l'agent est nommée ACₓ(LOGₚₖ) avec x l'indice référençant l'agent en question.

Le centre de contrôle SUPERV est capable à partir de la collecte des logs de l'agent AC d'identifier des stimulus : soient spontanément par la réception d'un log particulier, soit en effectuant des opérations de corrélations entre log reçus sur une fenêtre de temps, soient en comparant des logs émis de différents composants.

La fonction permettant de détecter le stimuli est nommée DETECT STIMULI sur les figures 4A et 4B.

Lorsqu'un stimuli est détecté, le centre de contrôle est capable de générer un nouveau niveau de verbosité qui sera attribué au composant Cₚ. Pour cela, comme vu précédemment, le centre de contrôle SUPERV est capable d'associer un scénario d'investigation à un évènement relatif à la détection du stimuli. Cette association permet de générer un niveau de verbosité adapté pour mener à bien l'analyse des logs du composant dans lequel l'événement s'est produit.

Il est possible également, que le centre de contrôle SUPERV modifie des niveaux de verbosité de différents composants pour investiguer sur les causes de la survenance d'un ou de plusieurs évènements identifiés.

La figure 4A comprend une flèche 20 indiquant que la fonction de modification du niveau de verbosité est engagé par le centre de contrôle SUPERV sur le composant Cₚ.

En plus de la séquence d'événements de la figure 4A, la figure 4B représente des étapes consécutives à la modification du niveau de verbosité N_{Cp}(1) devenu N_{Cp}(2) avec N_{Cp}(2) > N_{Cp}(1) du composant Cₚ.

Après la modification du niveau de verbosité, un plus grand nombre de logs est émis vers le centre de contrôle SUPERV, soit directement, soit via l'agent. A titre d'exemple le log LOG_{pq} associé à la tâche T_{pq} est alors émis après la modification du niveau de verbosité du composant Cp alors qu'il avait été filtré avant la modification dans cet exemple. Le nombre de logs correspond aux logs émis par des tâches dont le niveau de verbosité des logs est supérieur au nouveau niveau de verbosité du composant Cₚ. Le centre de contrôle SUPERV peut alors engager une étape d'investigation, nommée INVEST, pour en déduire les causes de la survenance du ou des évènements étant survenu(s) au sein du composant Cₚ grâce à l'analyse des logs qui sont remontés.

Lorsque cette investigation INVEST est terminée, soit par une action de fin engagée par le centre de contrôle SUPERV, soit après l'écoulement d'une première période de temps T₁ par exemple prédéfinie, alors une nouvelle fonction de modification du niveau de verbosité est engagée pour revenir au niveau par défaut N_{Cp}(1). Dans cet exemple, cette action 21 est initiée par le centre de contrôle SUPERV. Selon un autre exemple, elle pourrait être automatiquement appliquée par le composant lui-même.

Selon un mode de réalisation de l'invention, la première période donnée T₁ correspond à un laps de temps pendant lequel aucune menace en provenance du composant Cₚ n'a été identifiée par le centre de contrôle SUPERV après le changement de niveau de verbosité du composant Cₚ.

### Paramètre de performance

Selon un mode de réalisation, le centre de contrôle prend en compte au moins un paramètre de performance pour générer un nouveau niveau de verbosité après la détection d'un stimuli. Par exemple, lorsque le réseau est contraint, typiquement avec des bandes passantes limitées, la valeur du nouveau niveau de verbosité peut être adaptée pour ne pas encombrer la bande passante avec une génération d'un trop grand nombre de logs.

Selon ce mode de réalisation, le centre de contrôle SUPERV est capable d'effectuer une fonction prenant en compte un scénario d'investigation identifié à partir d'un stimuli et au moins un paramètre de performance relatif à une donnée du composant. Par exemple, si le composant est une application d'un terminal mobile connecté au réseau via une faible bande passante, alors le nouveau niveau de verbosité peut rester inchangé par rapport au niveau de verbosité courant du composant ou il peut être pondéré en fonction du paramètre de performance pris en compte. Le centre de contrôle SUPERV peut comprendre un inventaire des composants supervisés dans le réseau qui sont associés chacun à au moins une donnée relative à un paramètre de performance, telle qu'une valeur représentative d'une bande passante par exemple. Selon un autre exemple, le paramètre de performance est une donnée de performance du composant. Typiquement, si le composant utilise de nombreuses ressources, le centre de contrôle SUPERV peut pondérer la valeur du nouveau niveau de verbosité qui sera attribué à un composant de sorte à ne pas surcharger les performances dudit composant. La donnée de performance peut être définie par exemple par un nombre d'événements traités par le composant dans une période prédéfinie.

## Revendications

1. Procédé de gestion dynamique d'au moins un niveau de verbosité (N_{Cp}) d'au moins un composant (Cₚ) défini dans un réseau de données, ledit réseau de données ayant un centre de contrôle (SUPERV), chaque composant ((Cₚ)_{p∈[1 ;M]}) permettant l'exécution d'un ensemble de tâches et comprenant une configuration de gestion de sécurité associant un message d'état, appelé log, avec l'exécution d'une tâche (Tpₖ) par ledit composant, chaque log (LOGₚₖ) associé à une tâche indiquant au moins un évènement et ayant un niveau local (N_{Lk}), un log (LOGₚₖ) étant envoyé au centre de contrôle (SUPERV) lorsque son niveau local (N_{Lk}) est supérieur au niveau de verbosité du composant (N_{Cp}), le centre de contrôle (SUPERV) collectant un ensemble de logs pour la supervision dudit réseau, le centre de contrôle (SUPERV) comprenant une mémoire dans laquelle sont répertoriés :
un ensemble des composants ((Cₚ)_{p∈[1;M]}) du réseau et pour chaque composant (Cₚ) un premier niveau de verbosité (N_{Cp}(1)) qui lui est associé et
un ensemble de scénarios d'investigation comportant des stimuli prédéfinis, chaque stimulus prédéfini étant associé à un niveau de verbosité recommandé,
ledit procédé comprenant :
une détection d'un stimulus par le centre de contrôle (SUPERV), le stimulus correspondant à au moins un évènement identifié par un log reçu ;
une détermination d'au moins ledit composant (Cₚ) associé au stimulus détecté par le centre de contrôle (SUPERV) ;
une première modification dudit niveau de verbosité dudit composant du premier niveau de verbosité (N_{Cp}(1)) à un second niveau de verbosité (N_{Cp}(2)) pendant une première période donnée (T₁), ladite modification étant engagée par la génération d'une commande de supervision (MODIF(Nc)) par le centre de contrôle (SUPERV), le second niveau de verbosité (N_{Cp}(2)) étant défini selon le stimulus détecté, le second niveau de verbosité (N_{Cp}(2) du composant (Cₚ) étant compris entre le premier niveau de verbosité (N_{Cp}(1) et un niveau maximal de verbosité dudit composant (N_{Cp}(Max), la valeur du second niveau de verbosité (N_{Cp}(2)) étant générée en fonction d'un scénario d'investigation identifié en fonction d'un stimulus déterminé comprenant au moins un évènement identifié par un log reçu et d'une donnée de performance dudit composant associé à ce log pris en compte dans la détermination du stimuli.

2. Procédé de gestion dynamique selon la revendication 1, **caractérisé en ce qu'**après l'écoulement de la première période (T₁), le procédé comprend :
une seconde modification dudit niveau de verbosité dudit composant de sorte à revenir au premier niveau de verbosité (N_{Cp}(1)).

3. Procédé de gestion dynamique selon l'une quelconque des revendications 1 ou 2, **caractérisé en ce que** le stimulus est le résultat de :
au moins une opération de corrélation d'un ensemble d'événements survenant dans une fenêtre de temps donnée et reportés par une génération d'un ensemble de logs d'au moins ledit composant ;
une comparaison du résultat de l'opération de corrélation de logs collectés avec l'ensemble des scénarios d'investigation répertoriés dans le centre de contrôle (SUPERV).

4. Procédé de gestion dynamique selon l'une quelconque des revendications 1 à 3, **caractérisé en ce qu'**un scénario d'investigation et une opération de corrélation aboutissant à la détermination d'un stimuli prennent en compte :
une pluralité d'événements identifiés par des logs survenant dans une période donnée ;
un ou une pluralité de composant(s) associé(s) à au moins un événement ;
une identification d'au moins un équipement.

5. Procédé de gestion dynamique selon l'une quelconque des revendications 1 à 4, **caractérisé en ce qu'**au moins un agent (AC1, AC2) répertoriant un ensemble de composants est configuré pour collecter les logs générés d'une pluralité de composants, l'agent transmettant les logs collectés au centre de contrôle (SUPERV).

6. Procédé de gestion dynamique selon la revendication 5, **caractérisé en ce que** ledit agent (AC1, AC2) effectue des opérations de corrélations ente logs pour générer des indicateurs de criticité remonté au centre de contrôle sous forme de logs.

7. Procédé de gestion dynamique selon l'une quelconque des revendications 1 à 6, **caractérisé en ce qu'**un log comprend au moins un des éléments suivants :
une date correspondant à la survenance d'un évènement relatif à la tâche exécutée ;
un identifiant d'au moins un utilisateur ;
un identifiant d'au moins un composant ;
une catégorie ou une criticité.

8. Procédé de gestion dynamique selon l'une des revendications 1 à 4 ou 7, **caractérisé en ce que** chaque log généré est stocké dans un fichier local du composant ou transmis à un agent ou transmis au centre de contrôle (SUPERV) du réseau.

9. Procédé de gestion dynamique selon l'une quelconque des revendications 1 à 8, **caractérisé en ce qu'**un composant est un composant applicatif de la liste suivante :
un driver ;
un agent local d'un matériel informatique ;
une base de données ;
une application métier ;
un système d'exploitation ;
une application réseau ;
un firmware ;
un anti-virus ;
un pare-feu ;
un agent d'un composant matériel.

10. Procédé de gestion dynamique selon l'une quelconque des revendications 1 à 9, **caractérisé en ce qu'**un évènement susceptible d'intervenir et de générer un log est compris parmi la liste suivante :
une commande donnée sur une fonction d'un composant donné ;
une génération d'un résultat d'une fonction exécutée consécutivement à une commande ;
un accès, une ouverture, fermeture, une modification d'un fichier ou d'un dossier donné ;
un nombre déterminé de connexions simultanées à un composant ;
une requête donnée ayant une adresse IP donnée ;
un accès à une interface donnée du composant ;
un reboot du composant ;
une déconnexion du composant.

11. Centre de contrôle (SUPERV) de gestion **caractérisé en ce qu'**il réalise une gestion dynamique d'un niveau de verbosité d'au moins un composant (Cₚ) d'un réseau de données, chaque composant ((Cₚ)_{p∈[1 ;M]}) permettant l'exécution d'un ensemble de tâches et comprenant une configuration de gestion de sécurité associant un message d'état, appelé log, avec l'exécution d'une tâche (Tpₖ) par ledit composant, chaque log (LOGₚₖ) associé à une tâche indiquant au moins un évènement et ayant un niveau local (N_{Lk}), un log (LOGₚₖ) étant envoyé au centre de contrôle (SUPERV) lorsque son niveau local (N_{Lk}) est supérieur au niveau de verbosité du composant (N_{Cp}), le centre de contrôle (SUPERV) collectant un ensemble de logs pour la supervision dudit réseau, le centre de contrôle comprenant:
une interface réseau pour se connecter à un réseau de données et collecter des données émises par ledit composant du réseau ;
une mémoire permettant de stocker :
un ensemble de composants répertoriés du réseau de données et pour chaque composant (Cₚ) un premier niveau de verbosité (N_{Cp}(1)) qui lui est associé et;
des stimuli prédéfinis, chaque stimulus prédéfini étant associé à un niveau de verbosité recommandé, chaque stimulus correspondant à au moins un évènement ou au résultat de corrélations d'événements survenant dans un fenêtre de temps ;
des scénarios d'investigations correspondant à un ensemble de données nécessaires à collecter d'au moins un composant lorsqu'un stimulus est détecté, la collecte d'un ensemble de données nécessaires d'au moins un composant impliquant une configuration d'un niveau de verbosité dudit au moins composant ;
un calculateur permettant d'effectuer des opérations sur des données de logs émis par une pluralité de composants d'un réseau de données, dont :
au moins une opération de corrélation des évènements compris dans les logs générés par au moins ledit composant sur une fenêtre de temps donnée pour en déduire au moins un stimulus ;
au moins une opération de comparaison d'au moins un stimulus déduit avec un stimulus prédéfini ;
au moins une déduction d'une consigne devant être envoyée audit composant visant à modifier son niveau de verbosité à un second niveau de verbosité en fonction du résultat de la comparaison, du scénario d'investigation associé au stimulus déduit et d'une donnée de performance dudit composant associé auxdits logs pris en compte dans la détermination du stimulus déduit, le second niveau de verbosité étant compris entre le niveau de verbosité à modifier et un niveau maximal de verbosité dudit composant dont le niveau de verbosité est à modifier.

## Patentansprüche

1. Verfahren zur dynamischen Einstellung mindestens eines Ausführlichkeitsgrades (N_{Cp}) mindestens einer Komponente (Cₚ), definiert in einem Datennetzwerk, wobei das Datennetzwerk ein Überwachungszentrum (SUPERV) hat, wobei jede Komponente ((Cₚ)_{pε[1;M]}) die Ausführung einer Gruppe von Aufgaben erlaubt und eine Sicherheitsmanagementkonfiguration umfasst, die eine als log bezeichnete Zustandsmitteilung mit der Ausführung einer Aufgabe (Tpₖ) durch die Komponente verbindet, wobei jedes einer Aufgabe zugeordnete log (LOGₚₖ) mindestens ein Ereignis anzeigt und einen lokalen Grad (N_{Lk}) hat, wobei ein log (LOGₚₖ) an das Überwachungszentrum (SUPERV) geschickt wird, wenn sein lokaler Grad (N_{Lk}) höher als der Ausführlichkeitsgrad der Komponente (N_{Cp}) ist, wobei das Überwachungszentrum (SUPERV) eine Gruppe von logs für die Überwachung des Netzwerks sammelt, wobei das Überwachungszentrum (SUPERV) einen Speicher umfasst, in dem verzeichnet sind:
eine Gruppe der Komponenten ((Cₚ)_{pε[1;M]}) des Netzwerks und für jede Komponente (Cₚ) ein erster Ausführlichkeitsgrad (N_{Cp}(1)), der ihr zugeordnet ist, und
eine Gruppe von Untersuchungsszenarien, aufweisend vordefinierte Stimuli, wobei jeder vordefinierte Stimulus einem empfohlenen Ausführlichkeitsgrad zugeordnet ist,
wobei das Verfahren umfasst:
eine Detektion eines Stimulus durch das Überwachungszentrum (SUPERV), wobei der Stimulus mindestens einem von einem empfangenen log identifizierten Ereignis entspricht;
eine Bestimmung von mindestens der Komponente (Cₚ), die dem von dem Überwachungszentrum (SUPERV) ermittelten Stimulus zugeordnet ist;
eine erste Änderung des Ausführlichkeitsgrades der Komponente vom ersten Ausführlichkeitsgrad (N_{Cp}(1)) in einen zweiten Ausführlichkeitsgrad (Ncp(2)) während eines ersten gegebenen Zeitraums (T₁), wobei die Änderung durch die Erzeugung eines Überwachungsbefehls (MODIF(Nc)) durch das Überwachungszentrum (SUPERV) veranlasst wird, wobei der zweite Ausführlichkeitsgrad (Ncp(2)) gemäß dem ermittelten Stimulus definiert ist, wobei der zweite Ausführlichkeitsgrad (N_{Cp}(2) der Komponente (Cₚ) zwischen dem ersten Ausführlichkeitsgrad (N_{Cp}(1) und einem maximalen Ausführlichkeitsgrad der Komponente (N_{cp}(Max) liegt, wobei der Wert des zweiten Ausführlichkeitsgrades (N_{Cp}(2)) in Abhängigkeit von einem Untersuchungsszenario, identifiziert in Abhängigkeit von einem bestimmten Stimulus, umfassend mindestens ein von einem empfangenen log identifiziertes Ereignis, und von einer Leistungsangabe der Komponente erzeugt wird, die diesem log zugeordnet ist, das bei der Bestimmung des Stimulus berücksichtigt wurde.

2. Verfahren zur dynamischen Einstellung nach Anspruch 1, **dadurch gekennzeichnet, dass** nach Ablauf des ersten Zeitraums (T₁) das Verfahren umfasst:
eine zweite Änderung des Ausführlichkeitsgrades der Komponente, so dass er zum ersten Ausführlichkeitsgrad (N_{Cp}(1)) zurückkehrt.

3. Verfahren zur dynamischen Einstellung nach einem der Ansprüche 1 oder 2, **dadurch gekennzeichnet, dass** der Stimulus das Ergebnis ist von:
mindestens einer Korrelationsoperation einer Gruppe von Ereignissen, die in einem gegebenen Zeitfenster auftreten und durch eine Erzeugung einer Gruppe von logs mindestens der Komponente übertragen werden;
einem Vergleich des Ergebnisses der Korrelationsoperation von logs, die mit der Gruppe der Untersuchungsszenarien gesammelt wurden, die im Überwachungszentrum (SUPERV) verzeichnet sind.

4. Verfahren zur dynamischen Einstellung nach einem der Ansprüche 1 bis 3, **dadurch gekennzeichnet, dass** ein Untersuchungsszenario und eine Korrelationsoperation, die zur Bestimmung eines Stimulus führen, berücksichtigen:
eine Vielzahl von Ereignissen, die von logs identifiziert werden, die in einem gegebenen Zeitraum vorkommen;
eine oder eine Vielzahl von Komponente(n), die mindestens einem Ereignis zugeordnet ist/sind;
eine Identifikation von mindestens einer Ausrüstung.

5. Verfahren zur dynamischen Einstellung nach einem der Ansprüche 1 bis 4, **dadurch gekennzeichnet, dass** mindestens ein Agent (AC1, AC2), der eine Gruppe von Komponenten verzeichnet, ausgelegt ist, um die logs zu sammeln, die von einer Vielzahl von Komponenten erzeugt werden, wobei der Agent die gesammelten logs an das Überwachungszentrum (SUPERV) weiterleitet.

6. Verfahren zur dynamischen Einstellung nach Anspruch 5, **dadurch gekennzeichnet, dass** der Agent (AC1, AC2) Korrelationsoperationen zwischen logs durchführt, um Kritizitätsindikatoren zu erzeugen, die an das Überwachungszentrum in Form von logs weitergegeben werden.

7. Verfahren zur dynamischen Einstellung nach einem der Ansprüche 1 bis 6, **dadurch gekennzeichnet, dass** ein log mindestens eins der folgenden Elemente umfasst:
ein Datum, das dem Auftreten eines Ereignisses relativ zu der ausgeführten Aufgabe entspricht;
eine Kennung mindestens eines Benutzers;
eine Kennung mindestens einer Komponente;
eine Kategorie oder eine Kritizität.

8. Verfahren zur dynamischen Einstellung nach einem der Ansprüche 1 bis 4 oder 7, **dadurch gekennzeichnet, dass** jedes erzeugte log in einer lokalen Datei der Komponente gespeichert oder an einen Agenten weitergeleitet oder an das Überwachungszentrum (SUPERV) des Netzwerks weitergeleitet wird.

9. Verfahren zur dynamischen Einstellung nach einem der Ansprüche 1 bis 8, **dadurch gekennzeichnet, dass** eine Komponente eine Applikationskomponente aus der folgenden Liste ist:
ein Driver;
ein lokaler Agent einer IT-Hardware;
eine Datenbank;
eine Berufsapplikation;
ein Betriebssystem;
eine Netzwerkapplikation;
eine Firmware;
ein Antivirus;
eine Firewall;
ein Agent einer Hardwarekomponente.

10. Verfahren zur dynamischen Einstellung nach einem der Ansprüche 1 bis 9, **dadurch gekennzeichnet, dass** ein Ereignis, das eintreten und ein log erzeugen könnte, in der folgenden Liste enthalten ist:
ein gegebener Befehl für eine Funktion einer gegebenen Komponente;
eine Erzeugung eines Ergebnisses einer in Folge eines Befehls ausgeführten Funktion;
ein Zugriff, ein Öffnen, Schließen, eine Änderung einer Datei oder eines gegebenen Verzeichnisses;
eine bestimmte Anzahl gleichzeitiger Verbindungen mit einer Komponente;
eine gegebene Anforderung, die eine gegebene IP-Adresse hat;
ein Zugriff auf eine gegebene Schnittstelle der Komponente;
ein Reboot der Komponente;
eine Abmeldung der Komponente.

11. Einstellungs-Überwachungszentrum (SUPERV), **dadurch gekennzeichnet,**
**dass** es eine dynamische Einstellung eines Ausführlichkeitsgrades mindestens einer Komponente (Cₚ) eines Datennetzwerks durchführt, wobei jede Komponente ((Cₚ)_{pε[1;M]}) die Ausführung einer Gruppe von Aufgaben erlaubt und eine Sicherheitsmanagementkonfiguration umfasst, die eine als log bezeichnete Zustandsmitteilung mit der Ausführung einer Aufgabe (Tₚₖ) durch die Komponente verbindet, wobei jedes einer Aufgabe zugeordnete log (LOGₚₖ) mindestens ein Ereignis anzeigt und einen lokalen Grad (N_{Lk}) hat, wobei ein log (LOGₚₖ) an das Überwachungszentrum (SUPERV) geschickt wird, wenn sein lokaler Grad (N_{Lk}) höher als der Ausführlichkeitsgrad der Komponente (N_{Cp}) ist, wobei das Überwachungszentrum (SUPERV) eine Gruppe von logs für die Überwachung des Netzwerks sammelt, wobei das Überwachungszentrum umfasst:
eine Netzwerkschnittstelle, um sich mit einem Datennetzwerk zu verbinden und von der Komponente des Netzwerks gesendete Daten zu sammeln;
einen Speicher, der erlaubt zu speichern:
eine Gruppe verzeichneter Komponenten des Datennetzwerks und für jede Komponente (Cₚ) einen ersten Ausführlichkeitsgrad (N_{Cp}(1)), der ihr zugeordnet ist, und
vordefinierte Stimuli, wobei jeder vordefinierte Stimulus einem empfohlenen Ausführlichkeitsgrad zugeordnet ist, wobei jeder Stimulus mindestens einem Ereignis oder dem Ergebnis von Ereigniskorrelationen entspricht, die in einem Zeitfenster auftreten;
Untersuchungsszenarien, die einer Gruppe notwendiger Daten entsprechen, die von mindestens einer Komponente zu sammeln sind, wenn ein Stimulus ermittelt wird, wobei das Sammeln einer Gruppe notwendiger Daten von mindestens einer Komponente eine Konfiguration eines Ausführlichkeitsgrades der mindestens einen Komponente impliziert;
einen Rechner, der erlaubt, Operationen mit Daten von logs durchzuführen, die von einer Vielzahl von Komponenten eines Datennetzwerks gesendet wurden, darunter:
mindestens eine Korrelationsoperation der Ereignisse, die in den logs enthalten sind, erzeugt von mindestens der Komponente in einem gegebenen Zeitfenster, um daraus mindestens einen Stimulus abzuleiten;
mindestens eine Vergleichsoperation mindestens eines abgeleiteten Stimulus mit einem vordefinierten Stimulus;
mindestens eine Ableitung eines Sollwerts, der an die Komponente zu senden ist, zwecks Änderung ihres Ausführlichkeitsgrades auf einen zweiten Ausführlichkeitsgrad in Abhängigkeit vom Ergebnis des Vergleichs, des dem abgeleiteten Stimulus zugeordneten Untersuchungsszenarios und einer Leistungsangabe der Komponente, die den logs zugeordnet ist, die bei der Bestimmung des abgeleiteten Stimulus berücksichtigt wurden, wobei der zweite Ausführlichkeitsgrad zwischen dem zu ändernden Ausführlichkeitsgrad und einem maximalen Ausführlichkeitsgrad liegt, dessen Ausführlichkeitsgrad zu ändern ist.

## Claims

1. Method for the dynamic management of at least a verbosity level (N_{Cp}) of at least one component (Cₚ) defined in a data network, said data network having a control centre (SUPERV), each component ((Cₚ)_{pe[1;m]}) permitting the execution of a set of tasks and comprising a security management configuration associating a status message, called a log, with the execution of a task (Tpₖ) by said component, each log (LOGₚₖ) associated with a task indicating at least one event and having a local level (N_{Lk}), a log (LOGₚₖ) being sent to the control centre (SUPERV) when its local level (N_{Lk}) is superior to the verbosity level (N_{Cp}) of the component, the control centre (SUPERV) collecting a set of logs for the supervision of the said network, the control centre (SUPERV) comprising a memory in which are stored:
• a set of components ((CP)Pe[1 ;m]) of the network and for each component (Cp) a first verbosity level (NCp(1)) associated with it and
• a set of investigation scenarios including predefined stimuli, each predefined stimulus being associated with a recommended verbosity level.
said method including:
• a detection of a stimulus by the control centre (SUPERV), the stimulus corresponding to at least one event identified by a received log ;
• a determination of at least one component (Cₚ) associated with the stimulus detected by the control centre (SUPERV);
• a first change of said verbosity level of said component from the first verbosity level (N_{Cp}(1)) to a second verbosity level (N_{Cp}(2)) during a first given period (T₁), said change being engaged by the generation of a supervision command (MODIF(Nc)) by the control centre (SUPERV), said second verbosity level (N_{Cp}(2)) being defined according to the detected stimulus, the second verbosity level (N_{Cp}(2)) of the component (Cₚ) being comprised between the first verbosity level (N_{Cp}(1)) and a maximum verbosity level of said component (N_{Cp}(Max)), the value of the second verbosity level (N_{Cp}(2)) being generated as a function of an identified investigation scenario as a function of a determined stimulus comprising at least one event identified by a received log a of a performance data of said component associated to said log taken into account in the determination of the stimulus.

2. Method for dynamic management according to claim 1, **characterised in that** after the first period (T₁) has elapsed the method comprises:
▪ a second change of the verbosity level of said component so as to return to the first verbosity level (N_{Cp}(1)).

3. Method for dynamic management according to either of claims 1 or 2, **characterised in that** the stimulus is the result of:
▪ at least one operation to correlate a set of events occurring in a given time window and reported by generating a set of logs of at least said component;
▪ a comparison of the result of the operation to correlate collected logs with all the investigation scenarios stored in the control centre (SUPERV).

4. Method for dynamic management according to any of claims 1 to 3, **characterised in that** an investigation scenario and a correlation operation leading to the determination of a stimulus take the following into account:
▪ a plurality of events identified by logs occurring over a given period;
▪ one or a plurality of component(s) associated with at least one event;
▪ an identification of at least one device.

5. Method for dynamic management according to any of the preceding claims, **characterised in that** at least one agent (AC1, AC2) storing a set of components is configured to collect the generated logs of a plurality of components, the agent transmitting the collected logs to the control centre (SUPERV).

6. Method for dynamic management according to claim 5, **characterised in that** said agent (AC1, AC2) carries out operations of correlation between logs to generate criticity indicators transmitted to the controle centre as logs.

7. Method for dynamic management according to any of claims 1 to 6, **characterised in that** a log comprises at least one of the following elements:
▪ a date when an event relating to the executed task occurred;
▪ an identifier of at least one user;
▪ an identifier of at least one component;
▪ a category or a criticity.

8. Method for dynamic management according to one of claims 1 to 4 or 7, **characterised in that** each generated log is stored in a local file of the component or transmitted to an agent or transmitted to the network's control centre (SUPERV).

9. Method for dynamic management of at least a first verbosity level according to any of claims 1 to 8, **characterised in that** a component is an application component from the following list:
▪ a driver;
▪ a local agent of a computer hardware device;
▪ a database;
▪ a business application;
▪ an operating system;
▪ a network application;
▪ a firmware module;
▪ an anti-virus module;
▪ a firewall;
▪ an agent of a hardware component.

10. Method for dynamic management according to any one of claims 1 to 9, **characterised in that** an event which may occur and generate a log is in the following list:
▪ a command given by a function of a given component;
▪ generation of a result of a function executed following a command;
▪ access to, opening, closure or modification of a given file or folder;
▪ a determined number of simultaneous connections to a component;
▪ a given query with a given IP address;
▪ access to a given interface of the component;
▪ a reboot of the component;
▪ disconnection of the component.

11. Control centre (SUPERV) for management **characterised in that** it carries out a dynamic management of a verbosity level of at least one component (Cp) of a data network, each component ((Cₚ)_{pe[1;M]}) permitting the execution of a set of tasks and comprising a security management configuration associating a status message, called a log, with the execution of a task (Tpₖ) by said component, each log (LOGₚₖ) associated with a task indicating at least one event and having a local level (N_{Lk}), a log (LOGₚₖ) being sent to the control centre (SUPERV) when its local level (N_{Lk}) is superior to the verbosity level (N_{Cp}) of the component, the control centre (SUPERV) collecting a set of logs for the supervision of the said network, the control centre comprising:
▪ a network interface to log into a data network and to collect data emitted by at least one component in the network;
▪ a memory allowing storage of:
∘ a set of components ((CP)Pe[1 ;m]) of the network and for each component (Cp) a first verbosity level (NCp(1)) associated with it and
∘ predefined stimuli, each predefined stimulus being associated to at least one recommended verbosity level, each stimulus corresponding to at least one event or to the result of correlations of events occurring within a time window;
∘ investigation scenarios corresponding to a set of data necessary which must be collected from at least one component when a stimulus is detected, the collection of a set of necessary data from at least one component implying a configuration of a verbosity level of said at least one component;
▪ a computer enabling operations to be made on data from logs emitted by a plurality of components in a data network, including:
∘ at least one operation to correlate the events comprised in the logs generated by at least one component in a given time window, in order to deduce at least one stimulus from them;
∘ at least one operation to compare at least one deduced stimulus with a predefined stimulus;
∘ at least one deduction of an instruction which must be sent to a component intended to modify its verbosity level to a second verbosity level as a function of the result of the comparison, of the investigation scenario associated with the deducted stimulus, et of a performance data of said component associated to said logs taken into account in the determination of the deducted stimulus, the second verbosity level being comprised between the verbosity level to be modified and a maximum level of verbosity of said component for which the verbosity level is to be modified.
